# DEMANDE DE BREVET EUROPEEN

(11) **EP 4 786 223 A1**
(43) Date de publication de la demande: **05.08.2026**
(21) Numéro de dépôt: 26155307.7
(22) Date de dépôt: 30.01.2026
(51) Int. Cl.: B60H 1/00, B62D 25/08

(54) **VÉHICULE AUTOMOBILE COMPRENANT UN TABLIER DE SÉPARATION ET UN CONDUIT D' ADMISSION D' AIR**

(30) Priorité: 31.01.2025 FR 2501011
(71) Demandeur: Flexis, 92100 Boulogne Billancourt (FR)
(72) Inventeur: BARREIRO, Emmanuel, 78640 VILLIERS SAINT-FREDERIC (FR); FLOREZ, Fabiana, 78280 GUYANCOURT (FR); RAIFFE, Bruno, 78640 VILLIERS-SAINT-FREDERIC (FR); RAMOS, Alberto, 78640 VILLIERS-SAINT-FREDERIC (FR); WISS, Nicolas, 78460 CHEVREUSE (FR)
(74) Mandataire: Lavoix

(57) **Abrégé**

La présente invention concerne un véhicule automobile comprenant un compartiment moteur, un habitacle, un tablier (10) séparant le compartiment moteur de l'habitacle et étant pourvu d'une ouverture (100) ménagée à travers une partie principale (104) du tablier. Le véhicule automobile comprend un module de traitement d'air et un conduit d'admission (200) pour le module de traitement d'air disposé en regard de l'ouverture du tablier, du côté du compartiment moteur. Un bord (102) de l'ouverture (100) du tablier (10) comporte plusieurs languettes de guidage (106A, 106B, 106C, 106D) qui sont monoblocs avec la partie principale (104) du tablier (10), rabattues vers le compartiment moteur et configurées pour guider le conduit d'admission (200) jusqu'à sa position en regard de l'ouverture.

## Description

La présente invention concerne un véhicule automobile comprenant, entre autres, un tablier de séparation d'un compartiment moteur et d'un habitacle, ainsi qu'un conduit d'admission pour un module de traitement d'air disposé dans l'habitacle.

Le domaine technique de l'invention est celui des véhicules automobiles équipés d'un module de traitement d'air.

Dans ce domaine, il est connu d'installer un module de traitement d'air dans l'habitacle du véhicule et d'alimenter ce module avec de l'air provenant de l'extérieur du véhicule et transitant à travers un conduit d'alimentation qui est lui-même logé dans le compartiment moteur et qui débouche en regard d'une ouverture ménagée à travers le tablier. Dans ce genre de véhicule, la fixation du conduit d'admission d'air sur le tablier, à l'intérieur du compartiment moteur s'avère délicate car l'ouverture ménagée à travers le tablier est généralement située juste en dessous d'une traverse qui délimite le compartiment moteur vers le haut. L'accès à la zone de fixation du conduit d'admission dans le compartiment moteur est délicat, ce qui gêne un opérateur chargé de monter le conduit d'admission dans le compartiment moteur, en particulier lorsqu'il est nécessaire de mettre en place et de serrer les vis de fixation dans la zone de raccordement entre le conduit d'admission d'air et l'ouverture du tablier.

D'autre part, il est connu de KR101315753B1 d'assembler et de raccorder un module de traitement d'air et un conduit d'admission au moyen d'un verrou en forme de tige. Cet assemblage et ce raccordement ont lieu à l'intérieur de l'habitacle du véhicule. Une entrée du conduit d'admission est située en regard d'une ouverture ménagée dans un tablier du véhicule. L'air présent dans le compartiment moteur n'est pas positivement dirigé vers l'ouverture car aucun conduit d'admission n'est présent dans ce compartiment moteur.

Il est également connu de FR3014071A1 un agencement de tablier avant de véhicule automobile pour le montage d'un climatiseur.

C'est à ces inconvénients qu'entend plus particulièrement remédier l'invention en proposant un nouveau véhicule automobile dans lequel un conduit d'admission, disposé du côté du compartiment moteur, peut être efficacement guidé lors de son installation dans le véhicule, puis maintenu en position, sans nécessiter de la part de l'opérateur des contorsions pour la mise en place de vis ou d'autres moyens de fixation.

A cet effet, l'invention concerne un véhicule automobile comprenant :
- un compartiment moteur ;
- un habitacle ;
- un tablier séparant le compartiment moteur de l'habitacle et étant pourvu d'une ouverture ménagée à travers une partie principale du tablier ;
- un module de traitement d'air ;
- un conduit d'admission pour le module de traitement d'air disposé en regard de l'ouverture du tablier, du côté du compartiment moteur ;
caractérisé en ce qu'un bord de l'ouverture du tablier comporte plusieurs languettes de guidage qui sont :
- monoblocs avec la partie principale du tablier ;
- rabattues vers le compartiment moteur ;
- configurées pour guider le conduit d'admission jusqu'à sa position en regard de l'ouverture.

Grâce à l'invention, les languettes assurent une fonction de guidage intuitive et ergonomique pour l'opérateur lors de la mise en place du conduit d'admission dans le compartiment moteur, en regard de l'ouverture ménagée à travers la partie principale du tablier. Les languettes de guidage permettent également d'assurer un pré-maintien du conduit d'admission en position, avant l'immobilisation de celui-ci par des moyens de fixation situés dans une zone du compartiment moteur plus accessible que l'ouverture ménagée à travers la partie principale du tablier. Les languettes de guidage permettent également de maintenir une bonne géométrie du conduit d'admission et un maintien de celui-ci, au niveau de son extrémité arrière, c'est-à-dire de son extrémité qui coopère avec les languettes de guidage, sans avoir besoin d'autres organes de fixation au niveau de cette extrémité. En outre, comme les languettes sont monoblocs avec la partie principale du tablier, leur coût d'obtention est particulièrement modique.

Selon des aspects avantageux mais non obligatoires de l'invention, un véhicule automobile peut incorporer une ou plusieurs des caractéristiques suivantes, prises dans toute combinaison techniquement admissible :
- Les languettes de guidage sont en nombre supérieur ou égal à trois, de préférence supérieur ou égal à quatre.
- Le bord de l'ouverture est rectangulaire et comporte quatre tronçons rectilignes, dont chacun porte une languette de guidage et, de préférence, chaque languette de guidage est située au centre de chaque tronçon rectiligne.
- Les languettes de guidage forment des butées de blocage en translation du conduit d'admission par rapport au tablier, dans un plan parallèle au tablier, selon deux axes non-parallèles et selon deux directions parallèles à chaque axe.
- En configuration montée du conduit d'admission sur le tablier, les languettes de guidage sont engagées à l'intérieur du conduit d'admission.
- En configuration montée du conduit d'admission sur le tablier, chaque languette de guidage est parallèle ou quasi-parallèle à une portion adjacente d'une surface intérieure du conduit d'admission.
- Chaque languette de guidage est orientée avec un angle de dépouille par rapport à un axe central de l'ouverture, dans un sens convergent vers l'axe central de l'ouverture et en s'éloignant de la partie principale.
- Un joint d'étanchéité périphérique est disposé autour de l'ouverture et des languettes de guidage, sur une face du tablier orientée vers le compartiment moteur et, en configuration montée du conduit d'admission sur le tablier, le joint d'étanchéité périphérique est comprimé entre le tablier et le conduit d'admission.
- Au moins une surface interne du conduit d'admission est pourvue d'une nervure de centrage par rapport à une languette de guidage.
- Le véhicule comprend au moins un élément de support du conduit d'admission, le conduit d'admission coopère avec les languettes de guidage au niveau d'une première extrémité du conduit d'admission et une deuxième extrémité du conduit d'admission est équipée, d'une part, de moyens de centrage et, d'autre part, de moyens de fixation qui coopèrent respectivement avec des moyens de centrage et des moyens de fixation ménagés sur l'élément de support.

L'invention sera mieux comprise à la lecture de la description qui va suivre, donnée uniquement à titre d'exemple et faite en référence aux dessins annexés dans lesquels :

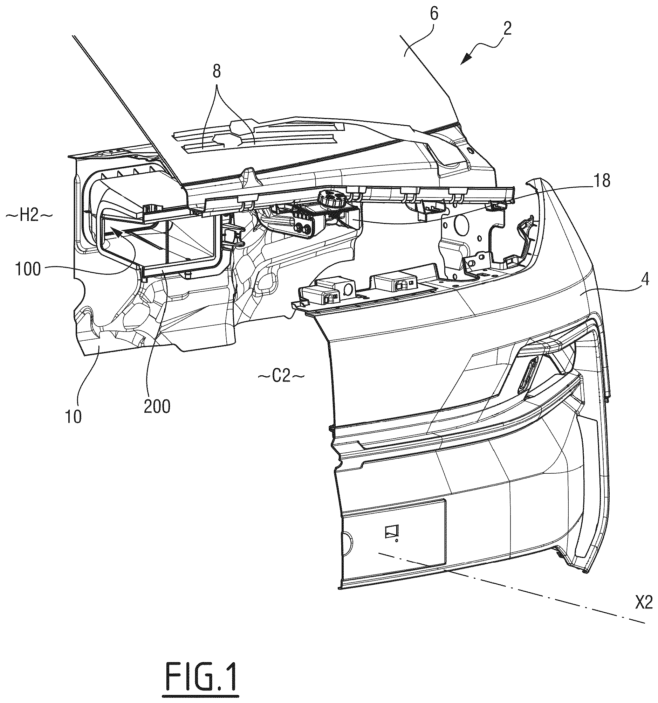

[Fig. 1] la figure 1 est une vue partielle en perspective par l'avant et en coupe longitudinale d'un véhicule automobile conforme à l'invention ;
[Fig. 2] la figure 2 est une coupe longitudinale partielle du véhicule de la figure 1 ;

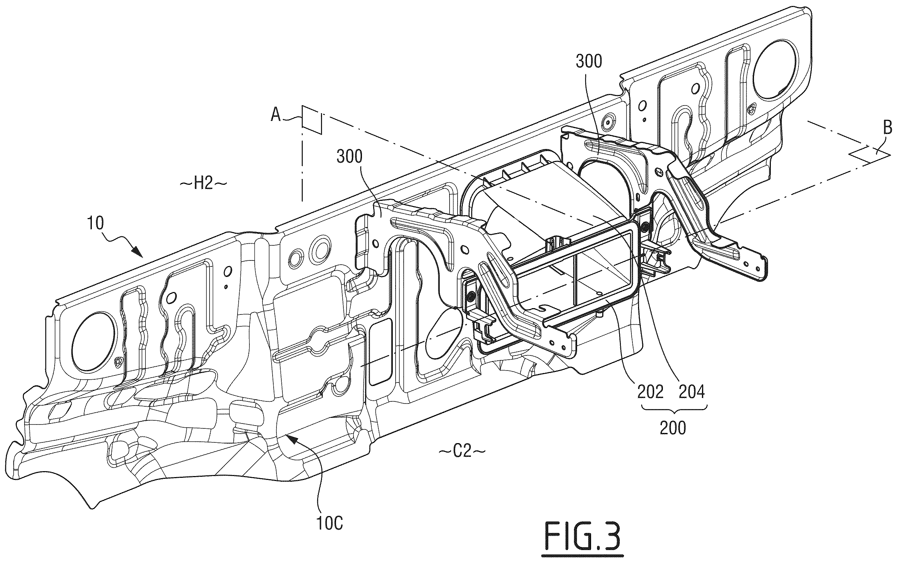

[Fig. 3] la figure 3 est une vue en perspective d'un tablier du véhicule des figures 1 et 2 et de certains éléments supportés par ce tablier ;
[Fig. 4] la figure 4 représente, sur deux inserts A) et B), deux coupes partielles des éléments visibles à la figure 3, respectivement selon le plan A et selon le plan B sur cette figure ;
[Fig. 5] la figure 5 est une vue en perspective partielle des éléments visibles aux figures 3 et 4, selon un autre angle, un élément de support étant représenté transparent et
[Fig. 6] la figure 6 est une vue en perspective éclatée de certains des éléments représentés aux figures 3 à 5.

Le véhicule 2 représenté sur les figures comprend une face avant 4, un pare-brise 6, des essuie-glaces 8 et divers autres composants qui ne sont pas tous représentés. Le véhicule 2 définit un compartiment moteur C2 et un habitacle H2 qui sont séparés par un tablier 10.

On note X2 un axe longitudinal du véhicule 2. Le long de l'axe longitudinal X2, le tablier 10 est intercalé entre le compartiment moteur C2, situé vers l'avant de ce tablier, et l'habitacle H2, situé vers l'arrière.

On note 10C la face du tablier 10 tournée vers le compartiment moteur C2. On note 10H la face du tablier 10 tournée vers l'habitacle H2.

Le tablier 10 est une pièce métallique ou en matériau composite qui s'étend globalement sur toute la largeur du véhicule et qui peut supporter certains organes disposés dans le compartiment moteur C2 et certains autres organes disposés dans l'habitacle H2.

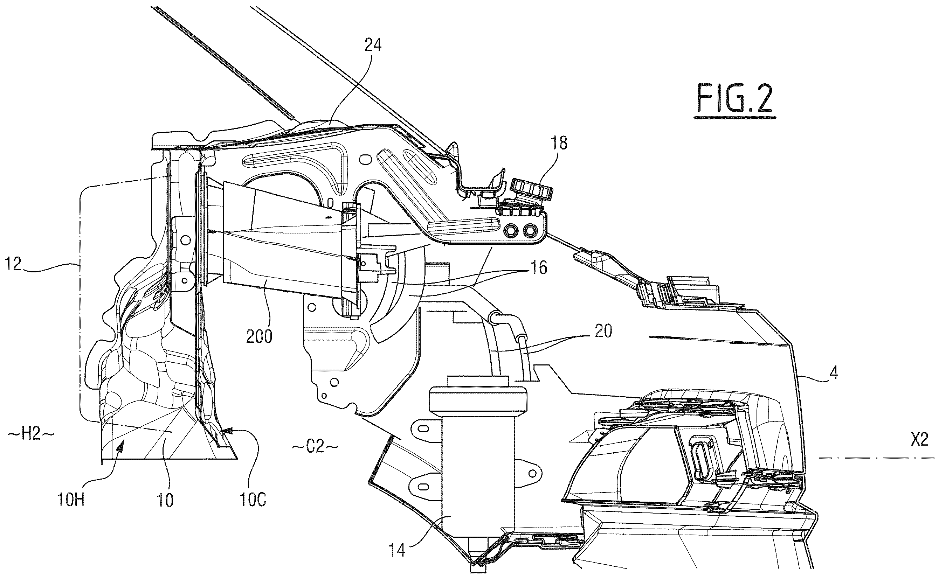

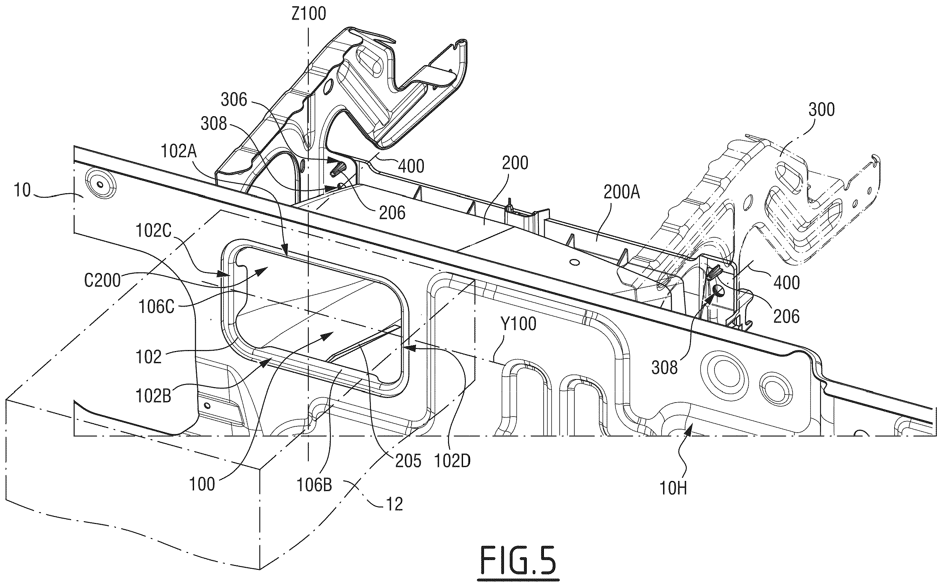

En particulier, du côté de l'habitacle H2, le tablier 10 supporte un module de traitement d'air 12 qui est représenté par son enveloppe externe en traits d'axe uniquement aux figures 2 et 5, étant précisé que, à la figure 5, le module de traitement d'air 12 est représenté transparent. Le module de traitement d'air 12 permet d'agir sur la qualité et/ou la température de l'air distribué dans l'habitacle H2. Ce module est parfois désigné sous l'expression module HVAC pour « Heating, Ventilation and Air-Conditioning ».

Divers accessoires tels qu'un réservoir 14 de liquide de rinçage, des conduits 16 de circulation de fluide caloporteur, un réservoir 18 de liquide de frein et des câbles électriques 20 sont disposés à l'intérieur du compartiment moteur.

Une ouverture 100 est ménagée à travers le tablier 10 et met en communication le compartiment moteur C2 et l'habitacle H2.

Le module de traitement d'air 12 est disposé en regard de l'ouverture 100.

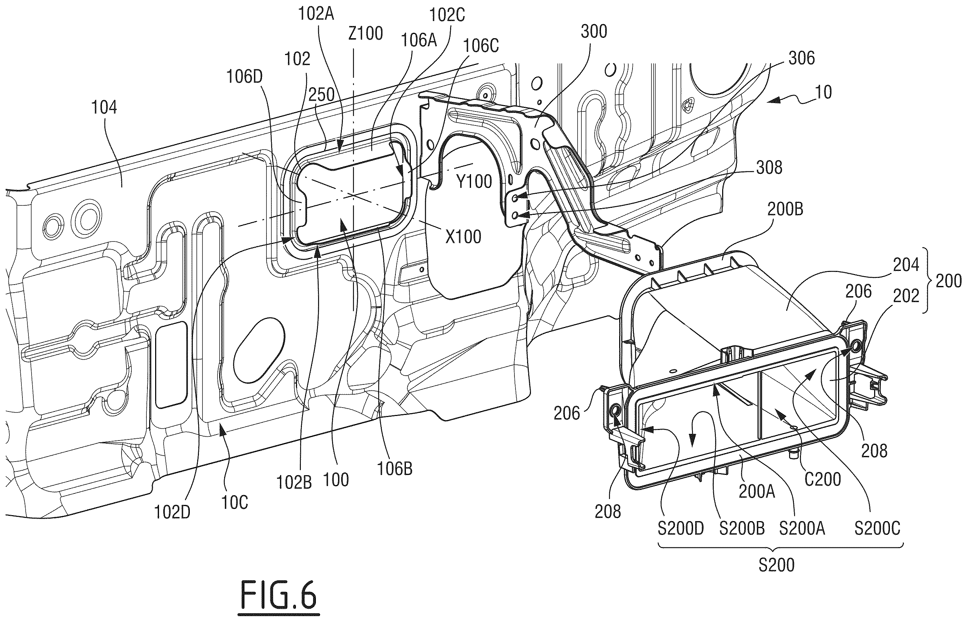

On note 102 le bord périphérique de l'ouverture 100. Avantageusement, et comme représenté sur les figures 5 et 6, ce bord périphérique est globalement rectangulaire, avec des coins arrondis.

On note 104 une partie principale du tablier 10 à travers laquelle est ménagée l'ouverture 100. Cette partie principale 104 s'étend globalement selon un plan transversal à l'axe longitudinal X2 du véhicule 2.

Un conduit 200 d'admission d'air pour le module de traitement d'air 12 est monté dans le compartiment moteur C2, également en regard de l'ouverture 100 mais du côté du tablier 10 opposé au module de traitement d'air 12. En d'autres termes, le conduit 200 d'admission d'air est situé sur l'avant du tablier 10.

On note 200A une extrémité avant du conduit d'admission 200, qui est tourné vers l'avant du véhicule 2 en configuration montée du conduit d'admission 200. On note 200B une extrémité arrière du conduit d'admission 200, qui est opposée à l'extrémité avant et tournée vers le tablier 10 en configuration montée du conduit d'admission.

Le conduit d'admission 200 comprend un élément tubulaire en matériau synthétique 202 qui définit un canal interne C200 du conduit d'admission 200. Le conduit d'admission 200 comprend également une enveloppe 204 disposée autour de l'élément tubulaire 202 avec une fonction d'isolation phonique.

On note S200 la surface radiale interne du conduit d'admission 200 qui définit le canal C200. La surface radiale interne S200 est à section rectangulaire et comprend quatre portions de surface, à savoir une portion de surface supérieure S200A, une portion de surface inférieure S200B, une portion de surface gauche S200C et une portion de surface droite S200D.

En configuration montée du conduit d'admission 200 sur le tablier 10, le canal C200 communique avec l'ouverture 100.

Selon un aspect non-représenté de l'invention, le conduit d'admission 200 peut être prolongé, vers l'avant du véhicule 2, par un pré-conduit qui s'étend jusqu'au voisinage de la face avant 4.

Le véhicule 2 comprend également une traverse inférieure de baie 24 qui s'étend sur l'essentiel de la largeur du véhicule automobile 2, perpendiculairement à l'axe longitudinal X2.

Deux éléments de support 300 sont montés sur le tablier 10, du côté du compartiment moteur C2. Les éléments de support 300 sont immobilisés sur le tablier 10 et sur la traverse inférieure de baie 24 par des moyens mécaniques irréversibles, tels que des cordons de soudure. Les pièces 10, 24 et 300 forment un sous-ensemble rigide et indémontable.

En configuration montée sur le tablier 10, le conduit d'admission 200 est disposé entre les deux éléments de support 300 et en dessous de la traverse inférieure de baie 24. Du fait de cette localisation du conduit d'admission 200, la zone de raccordement entre le canal C200 et l'ouverture 100 est peu accessible à un opérateur et peu visible pour celui-ci, aussi bien lors de l'assemblage du véhicule 2 en usine que lors d'une opération de maintenance ultérieure. En particulier, il serait difficile et pénible pour un opérateur d'aller mettre en place des vis de fixation du conduit d'admission 200 sur le tablier 10 autour de cette zone de raccordement.

Le bord périphérique 102 de l'ouverture 100 est équipé de quatre languettes 106A, 106B, 106C et 106D. Dans l'exemple des figures, le bord 102 comporte quatre tronçons rectilignes 102A, 102B, 102C et 102D. La languette 106A est portée par le tronçon rectiligne supérieur 102A du bord 102. La languette 106B est portée par le tronçon rectiligne inférieur 102B du bord périphérique 102. La languette 106C est portée par le tronçon rectiligne gauche 102C du bord périphérique 102 et la languette 106D est portée par le tronçon rectiligne droit 102D du bord périphérique 102. Ainsi, les languettes 106A, 106B, 106C et 106D peuvent être respectivement dénommées languette supérieure, languette inférieure, languette gauche et languette droite.

Avantageusement, chaque languette 106A, 106B, 106C et 106D est centrée sur le tronçon rectiligne 102A, 102B, 102C et 102D qui la porte.

Les languettes 106A, 106B, 106C et 106D sont monoblocs avec la partie principale 104 du tablier 10. Elles sont rabattues vers le compartiment moteur C2.

Elles ont pour fonction de guider le conduit d'admission 200 jusqu'à sa position en regard de l'ouverture 100, lors de la mise en place du conduit d'admission 200 vis-à-vis du tablier 10, en s'insérant dans le canal C200. Ainsi, les languettes 106A, 106B, 106C et 106D sont des languettes de guidage du conduit d'admission 200.

On note X100 un axe central de l'ouverture 100. On note Y100 un axe parallèle aux tronçons 102A et 102B, c'est-à-dire un axe transversal de l'ouverture 100. L'axe Y100 est horizontal ou quasi horizontal. On note Z100 un axe parallèle aux tronçons rectilignes 102C et 102D, c'est-à-dire un axe vertical de l'ouverture 100. Les axes X100, Y100 et Z100 sont orthogonaux.

Une fois les languettes de guidage 106A, 106B, 106C et 106D engagées dans le canal C200, ces languettes bloquent ensemble un déplacement en translation du conduit d'admission 200 parallèlement au tablier 10, selon les deux axes Y100 et Z100, ceci dans les deux directions de chacun de ces deux axes. En d'autres termes, les languettes de guidage forment des butées de blocage en translation du conduit d'admission 200 par rapport au tablier 10, dans un plan parallèle au tablier 10, selon les deux axes Y100 et Z100 non-parallèles et selon deux directions parallèles à chaque axe.

Ainsi, la structure de guidage formée des quatre languettes de guidage 106A, 106B, 106C et 106D permet de pré-positionner dans l'espace, à l'intérieur du compartiment moteur C2, le conduit d'admission 200 lorsque ce conduit est approché de la face 10C du tablier 10, en direction de l'ouverture 100. A cette occasion, il n'est pas nécessaire d'utiliser des vis ou des rivets de fixation du conduit d'admission 200 sur le tablier 10.

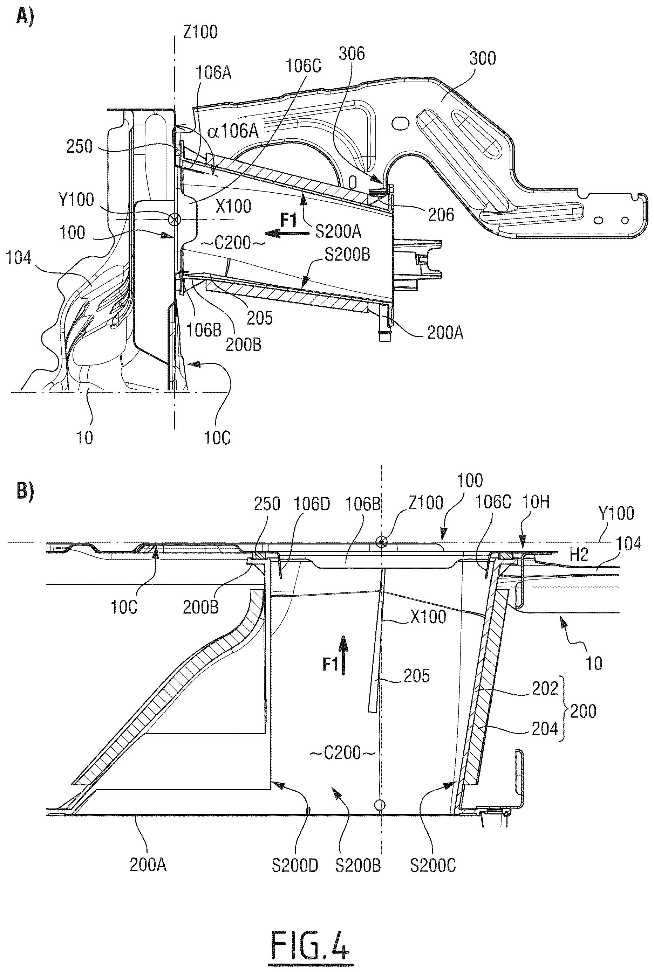

Le pré-positionnement du conduit d'admission 200 a lieu en le poussant en direction de la face 10C du tablier 10, dans le sens des flèches F1 à la figure 4, ce qui peut être réalisé par l'opérateur en manipulant l'extrémité avant 200A du conduit d'admission 200, sans devoir se contorsionner pour accéder à l'extrémité arrière 200B ou aux languettes de guidage 106A, 106B, 106C et 106D.

L'extrémité avant 200A du conduit d'admission 200 est équipée de deux ergots 206 dirigés vers l'extrémité arrière 200B. D'autre part, chaque élément de support 300 comprend une patte 304 équipée d'un orifice 306 configuré pour recevoir un ergot 206. Chaque patte 304 est disposée, par rapport au tablier 10, en avant, dans le compartiment moteur C2. Elle est accessible à l'opérateur. La fin du déplacement du conduit d'admission 200 dans le sens des flèches F1 a pour effet d'engager les deux ergots 206 dans les deux orifices 306. Ceci a pour effet de centrer le conduit d'admission 200 sur les éléments de support 300.

L'extrémité avant 200A du conduit d'admission 200 est équipée de deux alésages 208. D'autre part, chaque patte 304 d'un élément de support 300 est équipée d'un alésage 308.

Une fois réalisé le guidage du conduit d'admission 200 par rapport au tablier 10, grâce aux languettes de guidage 106A, 106B, 106C et 106D, et une fois réalisé le centrage du conduit d'admission 200 par rapport aux éléments de support 300, les alésages 208 et 308 sont alignés et juxtaposés. **Il** est alors possible à l'opérateur de mettre en place et de serrer dans ces alésages des boulons de fixation 400 représentés par leurs traits d'axe à la figure 6. Cette opération est relativement aisée car elle nécessite de travailler sur l'extrémité avant 200A du conduit d'admission 200 et sur les pattes 304, qui sont d'accès relativement aisé.

Ainsi, le conduit d'admission 200 peut être guidé par les languettes de guidage 106A, 106B, 106C et 106D lors de sa mise en place contre la face avant 10C du tablier 10, tout en étant centré par la coopération des ergots 206 et des orifices 306 en fin de mouvement d'approche dans le sens des flèches F1. **Il** peut ensuite être fixé sur les éléments de support 300 grâce aux alésages 208 et 308 et aux boulons 400. En particulier, les alésages 208 et 308, ainsi que les boulons 400, font partie des moyens de fixation du conduit d'admission 200 sur les éléments de support 300.

Comme cela ressort notamment des figures 4 et 6, un joint d'étanchéité périphérique 250 est apposé sur la face avant 10C du tablier 10, tout autour de l'ouverture 100. Ce joint entoure notamment les languettes de guidage 106A, 106B, 106C et 106D. Lorsque le conduit d'admission 200 est mis en place contre la face avant 10C du tablier 10, le conduit d'admission 200 vient écraser le joint d'étanchéité périphérique 250. Comme les languettes de guidage 106A, 106B, 106C et 106D sont engagées dans le canal C200 en configuration montée du conduit d'admission 200 sur le tablier 10, ces languettes de guidage ne perturbent pas la mise en compression du joint d'étanchéité périphérique 250.

Selon une variante non-représentée de l'invention, un joint d'étanchéité périphérique peut également être apposé sur la face arrière 10H du tablier 10, tout autour de l'ouverture 100.

Chaque languette 106A, 106B, 106C et 106D est orientée avec un angle de dépouille par rapport à l'axe central X100 et converge vers cet axe central en s'éloignant de la partie principale 104 du tablier 10. L'angle de dépouille α106A de la languette de guidage supérieure 106A est repéré sur l'insert A) de la figure 4. Les autres angles de dépouille sont comparables.

D'autre part, l'orientation de chaque languette de guidage 106A, 106B, 106C et 106D par rapport à un plan contenant les axes Y100 et Z100, c'est-à-dire la valeur de chaque angle de dépouille, est telle que, lorsqu'elle est insérée dans le canal C200, chaque languette est parallèle à la portion adjacente de la surface S200. En d'autres termes, comme visible à la figure 4, la languette de guidage supérieure 106A est parallèle à la portion de surface supérieure S200A, la languette de guidage inférieure 106B est parallèle à la portion de surface inférieure S200B, la languette de guidage gauche 106C est parallèle à la portion de surface gauche S200C et la languette de guidage droite 106D est parallèle à la portion de surface droite S200D.

Selon une variante non-représentée de l'invention, les languettes de guidage ne sont pas strictement parallèles aux portions de la surface S200 mais quasi-parallèles, c'est-à-dire parallèles à 5° près, par rapport à ces portions.

Avantageusement, une ou plusieurs des portions de surface S200A, S200B, S200C, S200D est/sont équipée(s) d'une ou plusieurs nervures de centrage du conduit d'admission 200 par rapport aux languettes de guidage 106A, 106B, 106C et 106D. Ceci est représenté aux figures 4 et 5 avec une unique nervure de centrage 205 ménagée sur la portion de surface inférieure S200B. La nervure de centrage 205 reçoit en appui surfacique une surface extérieure de la languette de guidage inférieure 106B en configuration montée du conduit d'admission 200 sur le tablier 10. Ceci peut être transposé aux autres portions de surface et plusieurs nervures de centrage peuvent être prévues sur une ou les portions de surface S200A, S200B, ...

Selon une variante non-représentée de l'invention, le nombre de languettes de guidage est différent de quatre. Par exemple, dans le cas d'une ouverture dont le bord est rectangulaire, deux languettes de guidage peuvent être prévues sur chaque grand tronçon rectiligne de ce bord, auquel cas le nombre de languettes de guidage est égal à six. Selon un autre exemple, dans le cas d'une ouverture dont le bord est circulaire, on peut prévoir trois languettes de guidage réparties à 120° autour d'un axe central de l'ouverture.

Quel que soit le nombre de languettes, celles-ci forment avantageusement des butées de blocage en translation du conduit d'admission 200 par rapport au tablier 10, dans un plan parallèle à ce tablier 10, selon deux axes comparables aux axes Y100 et Z100 identifiés ci-dessus et selon deux directions parallèles à chacun de ces axes.

Toute caractéristique décrite ci-dessus pour un mode de réalisation ou une variante est applicable aux autres modes de réalisation et variantes, pour autant que cela est techniquement possible.

## Revendications

1. Véhicule automobile (2) comprenant :
- un compartiment moteur (C2) ;
- un habitacle (H2) ;
- un tablier (10) séparant le compartiment moteur de l'habitacle et étant pourvu d'une ouverture (100) ménagée à travers une partie principale (104) du tablier ;
- un module de traitement d'air (12) ;
- un conduit d'admission (200) pour le module de traitement d'air disposé en regard de l'ouverture du tablier, du côté du compartiment moteur ;
**caractérisé en ce qu'**un bord (102) de l'ouverture (100) du tablier (10) comporte plusieurs languettes de guidage (106A, 106B, 106C, 106D) qui sont :
- monoblocs avec la partie principale (104) du tablier (10) ;
- rabattues vers le compartiment moteur (C2) ;
- configurées pour guider le conduit d'admission (200) jusqu'à sa position en regard de l'ouverture.

2. Véhicule selon la revendication 1, dans lequel les languettes de guidage (106A, 106B, 106C, 106D) sont en nombre supérieur ou égal à trois, de préférence supérieur ou égal à quatre.

3. Véhicule selon la revendication 2, dans lequel le bord de l'ouverture est rectangulaire et comporte quatre tronçons rectilignes (102A, 102B, 102C, 102D), dont chacun porte une languette de guidage (106A, 106B, 106C, 106D) et dans lequel, de préférence, chaque languette de guidage est située au centre de chaque tronçon rectiligne.

4. Véhicule selon l'une des revendications précédentes, dans lequel les languettes de guidage (106A, 106B, 106C, 106D) forment des butées de blocage en translation du conduit d'admission (200) par rapport au tablier (10), dans un plan parallèle au tablier, selon deux axes non-parallèles (Y100, Z100) et selon deux directions parallèles à chaque axe.

5. Véhicule selon l'une des revendications précédentes, dans lequel, en configuration montée du conduit d'admission (200) sur le tablier (10), les languettes de guidage (106A, 106B, 106C, 106D) sont engagées à l'intérieur du conduit d'admission (200).

6. Véhicule selon la revendication 5, dans lequel, en configuration montée du conduit d'admission (200) sur le tablier (10), chaque languette de guidage (106A, 106B, 106C, 106D) est parallèle ou quasi-parallèle à une portion adjacente (S200A, S200B, S200C, S200D) d'une surface intérieure (S200) du conduit d'admission.

7. Véhicule selon la revendication 6, dans lequel chaque languette de guidage (106A, 106B, 106C, 106D) est orientée avec un angle de dépouille (α106A) par rapport à un axe central (X100) de l'ouverture (100), dans un sens convergent vers l'axe central de l'ouverture et en s'éloignant de la partie principale (104).

8. Véhicule selon l'une des revendications 5 à 7, dans lequel un joint d'étanchéité périphérique (250) est disposé autour de l'ouverture (100) et des languettes de guidage (106A, 106B, 106C, 106D), sur une face (10C) du tablier (10) orientée vers le compartiment moteur (C2) et dans lequel, en configuration montée du conduit d'admission (200) sur le tablier, le joint d'étanchéité périphérique est comprimé entre le tablier et le conduit d'admission.

9. Véhicule selon l'une des revendications 5 à 8, dans lequel au moins une surface interne (S200B) du conduit d'admission (200) est pourvue d'une nervure de centrage (205) par rapport à une languette de guidage (106B).

10. Véhicule selon l'une des revendications précédentes, comprenant au moins un élément de support (300) du conduit d'admission (200), dans lequel le conduit d'admission coopère avec les languettes de guidage (106A, 106B, 106C, 106D) au niveau d'une première extrémité (200B) du conduit d'admission et dans lequel une deuxième extrémité (200A) du conduit d'admission est équipée, d'une part, de moyens de centrage (206) et, d'autre part, de moyens de fixation (208) qui coopèrent respectivement avec des moyens de centrage (306) et des moyens de fixation (308) ménagés sur l'élément de support.
